# EUROPEAN PATENT APPLICATION

(11) **EP 4 201 539 A1**
(43) Date of publication of application: **28.06.2023**
(21) Application number: 22212877.9
(22) Date of filing: 12.12.2022
(51) Int. Cl.: B08B 7/02, B01D 11/02, B01D 11/04, B08B 3/12

(54) **ULTRASONIC EXTRACTION EQUIPMENT**

(30) Priority: 27.12.2021 TW 110148847
(71) Applicant: Industrial Technology Research Institute, Chutung, Hsinchu 310401 (TW)
(72) Inventor: Fan, Chih-Hsuan, Hsinchu County, (TW); Tsai, Shu-Hsien, Kaohsiung City (TW); Lee, Shih-Chi, Pingtung County (TW); Chien, Chuan-Chi, Kaohsiung City (TW)
(74) Representative: dompatent von Kreisler Selting Werner - Partnerschaft von Patent- und Rechtsanwälten mbB

(57) **Abstract**

An ultrasonic extraction equipment (1) includes a solution tank (10) and a plurality of ultrasonic transducers (20, 20a, 20b). The ultrasonic transducers are disposed on an outer surface (110) of the solution tank. The ultrasonic transducers include a central ultrasonic transducer (20a) and a plurality of peripheral ultrasonic transducers (20b) arranged to surround the central ultrasonic transducer.

## Description

### TECHNICAL FIELD

The present disclosure is related to an ultrasonic extraction equipment.

### BACKGROUND

Ultrasound is sound waves or vibrations with frequencies higher than the upper audible limit of human hearing, and this limit is approximately 20 kHz (kilohertz). The ultrasound has been widely used in many fields such as medicine, industry, and information activities due to its high frequency characteristics. Some general applications, for example, include ultrasonic cleaning which is based on the mechanism of placing an object in a solution tank and using transducers to apply ultrasonic waves to the water in the solution tank to remove oil and dirt, thereby cleaning this object. Moreover, the ultrasound is used to extract specific substances with solvents and is applied to the extraction of high value-added functional active ingredients. Because the ultrasonic extraction has the advantages of high efficiency, short process time and less solvent usage compared to conventional extraction methods, it has received considerable attention in recent years.

In general, an ultrasonic extraction equipment includes a solution tank and several transducers for generating ultrasonic waves. The transducers may be mounted on the bottom, the side, or even integrally formed with the solution tank. For the ultrasonic extraction equipment with larger solution tank, it may render a problem that the ultrasonic waves generated by several transducers provide uneven sound pressure level distribution, which may affect the extraction yield and the uniformity of extraction quality. As to a conventional ultrasonic extraction method, the extraction is performed by multi-frequency ultrasonic technology in which the transducers which can generate ultrasonic waves with different frequencies, are simultaneously operated to generate multi-frequency ultrasonic waves, while the use of transducers for generating ultrasonic waves with different frequencies results in high energy consumption and high manufacturing costs for the ultrasonic extraction equipment.

### SUMMARY

In view of the above problems, the present disclosure provides an ultrasonic extraction equipment which helps to solve the problem of sound pressure level distribution.

According to one embodiment of the present disclosure, an ultrasonic extraction equipment includes a solution tank and a plurality of ultrasonic transducers. The ultrasonic transducers are disposed on an outer surface of the solution tank. The ultrasonic transducers include a central ultrasonic transducer and a plurality of peripheral ultrasonic transducers arranged to surround the central ultrasonic transducer.

According to the present disclosure, the ultrasonic extraction equipment includes a central ultrasonic transducer and multiple peripheral ultrasonic transducers arranged to surround the central ultrasonic transducer. The specific arrangement of the ultrasonic transducers as well as the specific spacing therebetween allow all ultrasonic transducers to perform ultrasonic extraction at the same frequency while achieving uniform sound pressure level distribution. Compared to a conventional means that the uniform sound pressure level distribution is achieved by using multi-frequency ultrasound, the present disclosure can prevent the use of high energy-consuming ultrasonic transducers as well as the requirement of complicated frequency control for ultrasonic extraction, thus reducing manufacturing costs and ultrasonic extraction costs.

### BRIEF DESCRIPTION OF THE DRAWINGS

FIG. 1 is a schematic view of an ultrasonic extraction equipment according to one embodiment of the present disclosure;
FIG. 2 is a bottom view of the ultrasonic extraction equipment in FIG. 1;
FIG. 3 is a schematic view of an ultrasonic transducer according to one embodiment of the present disclosure;
FIG. 4 is a schematic view of an ultrasonic transducer according to another embodiment of the present disclosure;
FIG. 5 is a schematic view showing an extraction process performed by the ultrasonic extraction equipment in FIG. 1;
FIG. 6 is a cross section at a depth in FIG. 5; and
FIG. 7 is a bottom view of an ultrasonic extraction equipment according to a comparative example.

### DETAILED DESCRIPTION

In the following detailed description, for purposes of explanation, numerous specific details are set forth in order to provide a thorough understanding of the disclosed embodiments. According to the description, claims and the drawings disclosed in the specification, one skilled in the art may easily understand the concepts and features of the present disclosure. The following embodiments further illustrate various aspects of the present disclosure, but are not meant to limit the scope of the present disclosure.

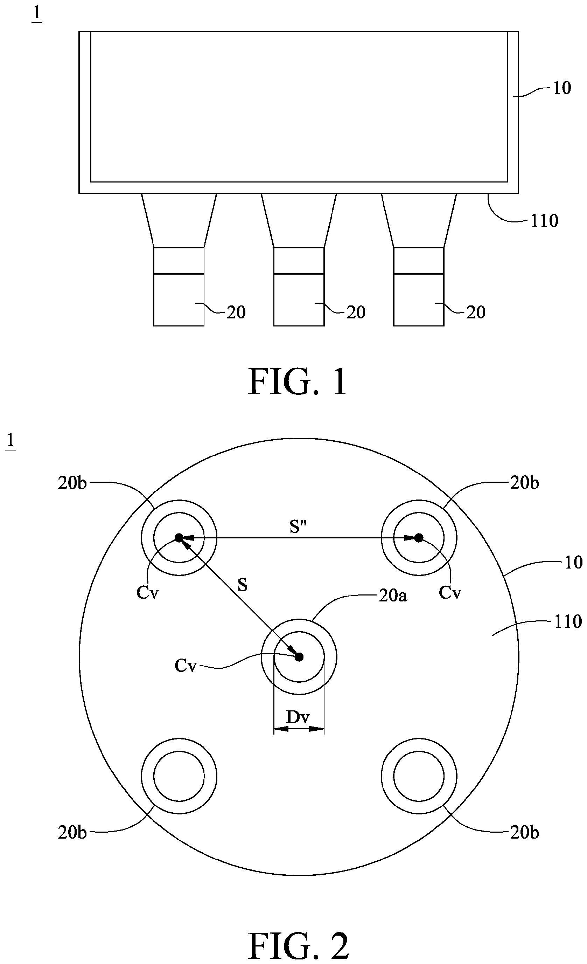

Please refer to FIG. 1 and FIG. 2. FIG. 1 is a schematic view of an ultrasonic extraction equipment according to one embodiment of the present disclosure, and FIG. 2 is a bottom view of the ultrasonic extraction equipment in FIG. 1. In this embodiment, an ultrasonic extraction equipment 1 includes a solution tank 10 and a plurality of ultrasonic transducer 20. The solution tank 10 is cylindrical, and the ultrasonic transducers 20 are disposed on an outer surface 110 of the solution tank 10. More specifically, each of the ultrasonic transducers 20 is disposed on a bottom surface at the exterior of the solution tank 10. The ultrasonic extraction equipment 1 includes a total of five ultrasonic transducers 20, the five ultrasonic transducers 20 includes a central ultrasonic transducer 20a and four peripheral ultrasonic transducers 20b arranged to surround the central ultrasonic transducer 20a, and the central ultrasonic transducer 20a is located at the center of the bottom surface. The present disclosure is not limited by the number of the ultrasonic transducers 20. In some embodiments, depending on the size of the solution tank, there may be more than four peripheral ultrasonic transducers. Also, the present disclosure is not limited by the shape of the solution tank 10. In some embodiments, the solution tank may be in other shapes, such as square, polygonal or irregular shape.

A central distance between any adjacent two of the ultrasonic transducers may be 1.6 times to 2.3 times greater than a diameter of each ultrasonic transducer. As shown in FIG. 2, the distance between respective centers Cv of two ultrasonic transducers can be defined as the central distance S. The central ultrasonic transducer 20a and the peripheral ultrasonic transducer 20b have the same shape and the same diameter Dv. The central distance S between the central ultrasonic transducer 20a and any one of the peripheral ultrasonic transducers 20b may be 1.6 times to 2.3 times greater than the diameter Dv of each ultrasonic transducer. FIG. 2 exemplarily depicts that the central distance S between the central ultrasonic transducer 20a and the peripheral ultrasonic transducers 20b may be two times greater than the diameter Dv.

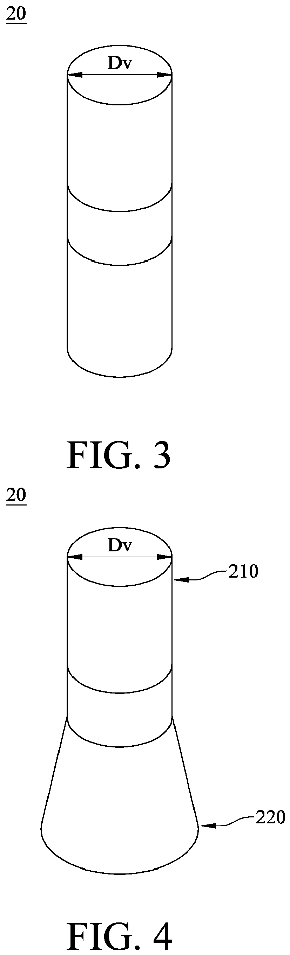

The ultrasonic transducer may be in a shape of cylinder or conical frustum. FIG. 3 is a schematic view of an ultrasonic transducer according to one embodiment of the present disclosure, and the ultrasonic transducer 20 is cylindrical with its head and foot having the same diameter Dv. FIG. 4 is a schematic view of an ultrasonic transducer according to another embodiment of the present disclosure, and the ultrasonic transducer 20 is in a shape of conical frustum with its head 210 having a smaller diameter than its foot 220; in this case, the diameter Dv of the ultrasonic transducer mentioned above refers to the minimum diameter of the ultrasonic transducer 20, as can be referred to the diameter of the head 210 in FIG. 4. FIG. 1 and FIG. 2 exemplarily depict that the ultrasonic extraction equipment 1 includes the ultrasonic transducer 20 in the shape of conical frustum, as can be referred to FIG. 4.

The central distance between any adjacent two of the ultrasonic transducers may be equal. Specifically, as shown in FIG. 2, the central distance S between the central ultrasonic transducer 20a and any one of the peripheral ultrasonic transducers 20b is equal to the central distance S between the central ultrasonic transducer 20a and another peripheral ultrasonic transducer 20b. Furthermore, a central distance S" between any adjacent two of the peripheral ultrasonic transducers may be 1.6 times to 2.3 times greater than the diameter Dv of each of the plurality of ultrasonic transducers. More specifically, in the case that the central distance between any adjacent two of the ultrasonic transducers is 1.6 times to 2.3 times greater than a diameter of each ultrasonic transducer, the central distance S between the ultrasonic transducer 20a and any peripheral ultrasonic transducer 20b may be equal to the central distance S between the central ultrasonic transducer 20a and another peripheral ultrasonic transducer 20b, and the central distance S" between adjacent two peripheral ultrasonic transducers 20b may be 1.6 times to 2.3 times greater than the diameter Dv of each ultrasonic transducer. For example, the central distance S" between a pair of adjacent peripheral ultrasonic transducers 20b may be 1.6 times greater than the diameter Dv of each ultrasonic transducer, and the central distance S" between another pair of adjacent peripheral ultrasonic transducers 20b may be 2.2 times greater than the diameter Dv of each ultrasonic transducer.

Referring to the embodiment shown in FIG. 2, the ultrasonic transducers (the central ultrasonic transducer 20a and the peripheral ultrasonic transducers 20b) may be operated at the same frequency. More specifically, the ultrasonic extraction equipment 1 is frequency-tunable and can be set at specific frequency for extraction. Each ultrasonic transducer may be switchable among multiple operation modes including, for example, a first operation mode in which each ultrasonic transducer can generate an ultrasound with a frequency of 20 kHz, a second operation mode in which each ultrasonic transducer can generate an ultrasound with a frequency of 35 kHz, and a third operation mode in which each ultrasonic transducer can generate an ultrasound with a frequency of 50 kHz. The switching among these operation modes can be implemented by known technical means such as microcontroller and switched circuit.

Different operation frequencies can be used for the extraction of different substances. For example, when an extraction of pectin from fruit peel is performed, all ultrasonic transducers (the central ultrasonic transducer 20a and the peripheral ultrasonic transducers 20b) can be switched to the first operation mode, so that the ultrasonic extraction equipment 1 generates ultrasound with a frequency of 20 kHz for the extraction. When an extraction of galacturonic acid from pectin is performed, all ultrasonic transducers can be switched to the third operation mode, so that the ultrasonic extraction equipment 1 generates ultrasound with a frequency of 50 kHz for the extraction.

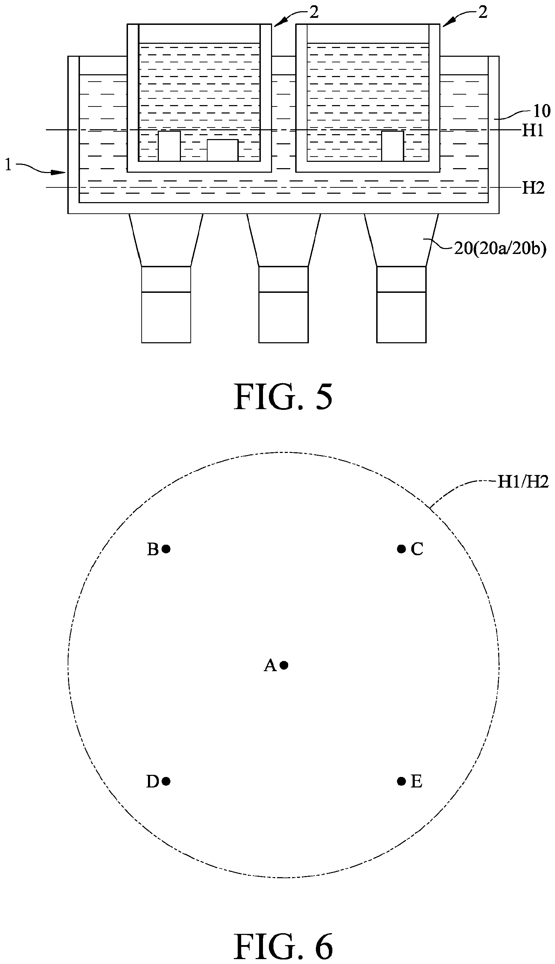

Please further refer to FIG. 5 and FIG. 6. FIG. 5 is a schematic view showing an extraction process performed by the ultrasonic extraction equipment in FIG. 1, and FIG. 6 is a cross section at a depth in FIG. 5. Appropriate amount of pure water is provided into the solution tank 10 of the ultrasonic extraction equipment 1, and then a container 2 containing organic solvent and raw materials is placed in the solution tank 10. All ultrasonic transducers 20 are operated at the same frequency to perform the extraction, and the ultrasonic transducers together provide the solution tank 10 with an ultrasound having a sound pressure level equivalent to 30 mV to 140 mV in pure water. For example, as to the cross section at a depth H1 under the water surface in FIG. 5, when each of the ultrasonic transducers 20 generates the ultrasound with a frequency of 20 kHz, the average sound pressure level can be equivalent to 79 ± 7 mV. When each of the ultrasonic transducers 20 generates the ultrasound with a frequency of 35 kHz, the average sound pressure level can be equivalent to 122 ± 4 mV. When each of the ultrasonic transducers 20 generates the ultrasound with a frequency of 50 kHz, the average sound pressure level can be equivalent to 41 ± 2 mV. Also, as to the cross section at a depth H2 farther from the water surface in FIG. 5, when each of the ultrasonic transducers 20 generates the ultrasound with a frequency of 20 kHz, the average sound pressure level can be equivalent to 86 ± 6 mV. When each of the ultrasonic transducers 20 generates the ultrasound with a frequency of 35 kHz, the average sound pressure level can be equivalent to 130 ± 6 mV. When each of the ultrasonic transducers 20 generates the ultrasound with a frequency of 50 kHz, the average sound pressure level can be equivalent to 46 ± 2mV.

According to the present disclosure, all ultrasonic transducers 20 of the ultrasonic extraction equipment 1 can perform ultrasonic extraction with the same frequency, and a uniform sound pressure level distribution can be observed in the liquid contained in the solution tank 10. The measurement and calculation of the sound pressure level distribution may be implemented by, but not limited to, the following methods: a cross section at either the depths H1 or H2 is selected, and the sound pressure levels at various positions on this cross section are measured to obtain a three-dimensional distribution of sound pressure level on this cross section. On this cross section, a central position "A" corresponding to the central ultrasonic transducer 20a and multiple peripheral positions "B" through "E" respectively corresponding to the peripheral ultrasonic transducers 20b are taken as the references for sound pressure level, and these references are averaged to obtain an average sound pressure level.

The effect of one or more features of the present disclosure on the sound pressure level distribution will be described hereafter.

### [The effect of the central distance of ultrasonic transducers on the sound pressure level distribution]

Take the ultrasonic extraction equipment 1 in FIG. 1 through FIG. 5 as an example. A cross section at the depth of 4.5 cm under the water surface is selected, and the sound pressure level is measured with all ultrasonic transducers operated at a frequency of 20 kHz. The ratio (S/D) of the central distance S between adjacent ultrasonic transducers 20 (the central ultrasonic transducer 20a and the peripheral ultrasonic transducer 20b) to the diameter Dv of the ultrasonic transducer 20 is calculated, and the relationship between this ratio and the measured sound pressure levels (SPLs) are shown in TABLE 1 below.

| TABLE 1 | | | | | | | |
|---|---|---|---|---|---|---|---|
| S/D | SPL at central position "A" (mV) | SPL at peripheral position "B" (mV) | SPL at peripheral position "C" (mV) | SPL at peripheral position "D" (mV) | SPL at peripheral position "E" (mV) | Average SPL (mV) | Standard deviation of SPLs |
| 1.6 | 105 | 100 | 90 | 104 | 121 | 104 | 11.203 |
| 1.7 | 101 | 88 | 87 | 97 | 110 | 96.6 | 9.555 |
| 1.8 | 100 | 84 | 86 | 94 | 100 | 92.8 | 7.563 |
| 1.9 | 84 | 80 | 86 | 92 | 97 | 87.8 | 6.723 |
| 2.0 | 80 | 84 | 82 | 94 | 90 | 86 | 5.831 |
| 2.1 | 74 | 72 | 88 | 80 | 81 | 79 | 6.325 |
| 2.2 | 71 | 77 | 83 | 74 | 66 | 74.2 | 6.380 |
| 2.3 | 78 | 72 | 86 | 69 | 61 | 73.2 | 9.419 |

According to TABLE 1, it can be observed that when the ratio (S/D) of the central distance S to the diameter Dv of the ultrasonic transducer 20 is in the range of 1.6 to 2.3, it is helpful to obtain a uniform sound pressure level distribution. Especially, a smaller standard deviation of the sound pressure levels can be observed when the ratio (S/D) is in the range of 1.7 to 2.2, which represents that a flat three-dimensional distribution of sound pressure level can be expected. That is, similar or even substantially identical value of the sound pressure level can be measured at various positions on this cross section.

### [The effect of the central ultrasonic transducer on the sound pressure level distribution]

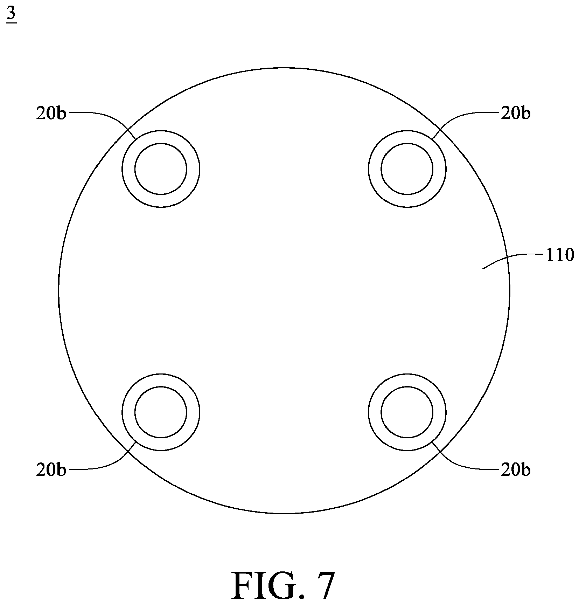

FIG. 7 is a bottom view of an ultrasonic extraction equipment according to a comparative example. Take the ultrasonic extraction equipment 1 in FIG. 1 through FIG. 6 and the ultrasonic extraction equipment 3 in FIG. 7 as examples. The difference between the ultrasonic extraction equipment 3, as a comparative example (CE), and the ultrasonic extraction equipment 1, as the embodiment (EM) of the present disclosure, is that there are peripheral ultrasonic transducers 20b on the bottom surface (outer surface 110) of the ultrasonic extraction equipment 3 without the central ultrasonic transducer 20a.

The cross sections at the depths of 3 cm and 4.5 cm under the water surface are selected, and the sound pressure level is measured with all ultrasonic transducers operated at a frequency of 20 kHz, 35 kHz or 50 kHz. The relationship between presence of the central ultrasonic transducer 20a and the measured sound pressure levels (SPLs) are shown in TABLE 2 through TABLE 7 below.

| TABLE 2 | | | | | | | |
|---|---|---|---|---|---|---|---|
| Operation frequency of each ultrasonic transducer: 20kHz; Cross section: 3 cm under water surface | | | | | | | |
| - | SPL at central position "A" (mV) | SPL at peripheral position "B" (mV) | SPL at peripheral position "C" (mV) | SPL at peripheral position "D" (mV) | SPL at peripheral position "E" (mV) | Maximum SPL (mV) | Minimum SPL (mV) |
| EM | 72 | 78 | 73 | 88 | 82 | 88 | 72 |
| CE | 67 | 74 | 61 | 68 | 77 | 77 | 61 |
| - | Median SPL (mV) | Average SPL (mV) | Standard deviation of SPLs | - | - | - | - |
| EM | 78 | 78.6 | 6.618 | - | - | - | - |
| CE | 68 | 69.4 | 6.270 | - | - | - | - |

| TABLE 3 | | | | | | | |
|---|---|---|---|---|---|---|---|
| Operation frequency of each ultrasonic transducer: 20kHz; Cross section: 4.5 cm under water surface | | | | | | | |
| - | SPL at central position "A" (mV) | SPL at peripheral position "B" (mV) | SPL at peripheral position "C" (mV) | SPL at peripheral position "D" (mV) | SPL at peripheral position "E" (mV) | Maximum SPL (mV) | Minimum SPL (mV) |
| EM | 80 | 84 | 82 | 94 | 90 | 94 | 80 |
| CE | 76 | 79 | 61 | 84 | 87 | 87 | 61 |
| - | Median SPL (mV) | Average SPL (mV) | Standard deviation of SPLs | - | - | - | - |
| EM | 84 | 86 | 5.831 | - | - | - | - |
| CE | 79 | 77.4 | 10.114 | - | - | - | - |

| TABLE 4 | | | | | | | |
|---|---|---|---|---|---|---|---|
| Operation frequency of each ultrasonic transducer: 35kHz; Cross section: 3 cm under water surface | | | | | | | |
| - | SPL at central position "A" (mV) | SPL at peripheral position "B" (mV) | SPL at peripheral position "C" (mV) | SPL at peripheral position "D" (mV) | SPL at peripheral position "E" (mV) | Maximum SPL (mV) | Minimum SPL (mV) |
| EM | 128 | 123 | 122 | 117 | 122 | 128 | 117 |
| CE | 114 | 121 | 100 | 114 | 132 | 132 | 100 |
| - | Median SPL (mV) | Average SPL (mV) | Standard deviation of SPLs | - | - | - | - |
| EM | 122 | 122.4 | 3.912 | - | - | - | - |
| CE | 114 | 116.2 | 11.670 | - | - | - | - |

| TABLE 5 | | | | | | | |
|---|---|---|---|---|---|---|---|
| Operation frequency of each ultrasonic transducer: 35kHz; Cross section: 4.5 cm under water surface | | | | | | | |
| - | SPL at central position "A" (mV) | SPL at peripheral position "B" (mV) | SPL at peripheral position "C" (mV) | SPL at peripheral position "D" (mV) | SPL at peripheral position "E" (mV) | Maximum SPL (mV) | Minimum SPL (mV) |
| EM | 135 | 128 | 129 | 123 | 133 | 135 | 123 |
| CE | 141 | 119 | 121 | 134 | 139 | 141 | 119 |
| - | Median SPL (mV) | Average SPL (mV) | Standard deviation of SPLs | - | - | - | - |
| EM | 129 | 129.6 | 4.669 | - | - | - | - |
| CE | 134 | 130.8 | 10.208 | - | - | - | - |

| TABLE 6 | | | | | | | |
|---|---|---|---|---|---|---|---|
| Operation frequency of each ultrasonic transducer: 50kHz; Cross section: 3 cm under water surface | | | | | | | |
| - | SPL at central position "A" (mV) | SPL at peripheral position "B" (mV) | SPL at peripheral position "C" (mV) | SPL at peripheral position "D" (mV) | SPL at peripheral position "E" (mV) | Maximum SPL (mV) | Minimum SPL (mV) |
| EM | 41 | 43 | 40 | 38 | 41 | 43 | 38 |
| CE | 36 | 42 | 30 | 31 | 48 | 48 | 30 |
| - | Median SPL | Average SPL | Standard deviation | - | - | - | - |
| | (mV) | (mV) | of SPLs | | | | |
| EM | 41 | 40.6 | 1.817 | - | - | - | - |
| CE | 36 | 37.4 | 7.603 | - | - | - | - |

| TABLE 7 | | | | | | | |
|---|---|---|---|---|---|---|---|
| Operation frequency of each ultrasonic transducer: 50kHz; Cross section: 4.5 cm under water surface | | | | | | | |
| - | SPL at central position "A" (mV) | SPL at peripheral position "B" (mV) | SPL at peripheral position "C" (mV) | SPL at peripheral position "D" (mV) | SPL at peripheral position "E" (mV) | Maximum SPL (mV) | Minimum SPL (mV) |
| EM | 48 | 49 | 45 | 43 | 45 | 43 | 49 |
| CE | 45 | 51 | 39 | 44 | 52 | 52 | 39 |
| - | Median SPL (mV) | Average SPL (mV) | Standard deviation of SPLs | - | - | - | - |
| EM | 45 | 46 | 2.449 | - | - | - | - |
| CE | 45 | 46.2 | 5.357 | - | - | - | - |

Referring to TABLE 2 through TABLE 7, the presence of the central ultrasonic transducer is helpful to obtain a uniform sound pressure level distribution. As shown in TABLE 3, a smaller standard deviation of the sound pressure levels can be observed in the embodiment of the present disclosure, which represents that the central ultrasonic transducer is helpful to achieve uniform sound pressure level distribution on a cross section relatively deeper under the water surface. As shown in TABLE 4 through TABLE 7, a smaller standard deviation of the sound pressure levels can be observed in the embodiment of the present disclosure, which represents that the central ultrasonic transducer is also helpful to achieve uniform sound pressure level distribution when the ultrasonic transducers are operated at higher frequency.

According to the present disclosure, the ultrasonic extraction equipment includes a central ultrasonic transducer and multiple peripheral ultrasonic transducers arranged to surround the central ultrasonic transducer. The specific arrangement of the ultrasonic transducers as well as the specific spacing therebetween allow all ultrasonic transducers to perform ultrasonic extraction at the same frequency while achieving uniform sound pressure level distribution. Compared to a conventional means that the uniform sound pressure level distribution is achieved by using multi-frequency ultrasound, the present disclosure can prevent the use of high energy-consuming ultrasonic transducers as well as the requirement of complicated frequency control for ultrasonic extraction, thus reducing manufacturing costs and ultrasonic extraction costs.

It will be apparent to those skilled in the art that various modifications and variations can be made to the present disclosure. It is intended that the specification and examples be considered as exemplary embodiments only, with a scope of the disclosure being indicated by the following claims and their equivalents.

## Claims

1. An ultrasonic extraction equipment (1, 3), comprising:
a solution tank (10); and
a plurality of ultrasonic transducers (20, 20a, 20b) disposed on an outer surface (110) of the solution tank;
wherein the plurality of ultrasonic transducers comprise a central ultrasonic transducer (20a) and a plurality of peripheral ultrasonic transducers (20b) arranged to surround the central ultrasonic transducer.

2. The ultrasonic extraction equipment according to claim 1, wherein the outer surface (110) is a bottom surface of the solution tank, and the central ultrasonic transducer (20a) is located at a center of the bottom surface.

3. The ultrasonic extraction equipment according to claim 1, wherein a central distance (S, S") between any adjacent two of the plurality of ultrasonic transducers (20, 20a, 20b) is 1.6 times to 2.3 times greater than a diameter of each of the plurality of ultrasonic transducers.

4. The ultrasonic extraction equipment according to claim 1, wherein a central distance (S) between the central ultrasonic transducer (20a) and any one of the plurality of peripheral ultrasonic transducers (20b) is equal.

5. The ultrasonic extraction equipment according to claim 1, wherein a central distance (S") between any adjacent two of the plurality of peripheral ultrasonic transducers (20b) is 1.6 times to 2.3 times greater than a diameter of each of the plurality of ultrasonic transducers.

6. The ultrasonic extraction equipment according to claim 1, wherein the plurality of ultrasonic transducers (20, 20a, 20b) are operated at same frequency.

7. The ultrasonic extraction equipment according to claim 1, wherein each of the plurality of ultrasonic transducers (20, 20a, 20b) is switchable among multiple operation modes, and the operation modes comprise 20 kHz, 35 kHz, and 50 kHz.

8. The ultrasonic extraction equipment according to claim 1, wherein the solution tank (10) is cylindrical, square, polygonal, or irregular shaped.

9. The ultrasonic extraction equipment according to claim 1, wherein the plurality of ultrasonic transducers (20, 20a, 20b) together provide the solution tank (10) with an ultrasound having a sound pressure level equivalent to 30 mV to 140 mV in pure water.

10. The ultrasonic extraction equipment according to claim 9, wherein the plurality of ultrasonic transducers (20, 20a, 20b) comprises a total of at least five ultrasonic transducers.
